## Europäisches Patentamt
## European Patent Office
## Office européen des brevets

(19)

(11) Numéro de publication: **0 055 969**
**B1**

(12)

# FASCICULE DE BREVET EUROPEEN

(45) Date de publication du fascicule du brevet:
**27.03.85**

(51) Int. Cl.⁴: **G 21 C 15/18**

(21) Numéro de dépôt: **81402102.8**

(22) Date de dépôt: **31.12.81**

(54) **Procédé et dispositif de refroidissement du circuit primaire d'un réacteur nucléaire à eau sous pression.**

(30) Priorité: **31.12.80 FR 8027859**

(43) Date de publication de la demande:
**14.07.82 Bulletin 82/28**

(45) Mention de la délivrance du brevet:
**27.03.85 Bulletin 85/13**

(84) Etats contractants désignés:
**BE DE FR GB IT**

(56) Documents cités:
**EP - A - 0 004 167**
**FR - A - 1 211 537**
**FR - A - 1 308 523**
**FR - A - 2 243 498**
**FR - A - 2 334 175**
**FR - A - 2 390 810**
**US - A - 4 239 596**

(73) Titulaire: **Framatome, Tour Fiat 1 place de la Coupole, F-92400 Courbevoie (FR)**

(72) Inventeur: **Esayan, Mariana, 33 rue Victor Hugo, F-92400 Courbevoie (FR)**
Inventeur: **Celerier, Gérard, 21 rue Condorcet, F-92140 Clamart (FR)**
Inventeur: **Bonhomme, Nicolas Marie, 104 rue Saint-Jean, F-95300 Pontoise (FR)**

(74) Mandataire: **Lavoix, Jean et al, c/o Cabinet Lavoix 2, Place D'Estienne D'Orves, F-75441 Paris Cedex 09 (FR)**

BUNDESDRUCKEREI BERLIN

## Description

L'invention concerne un procédé de refroidissement du circuit primaire d'un réacteur nucléaire à eau sous pression, pour mise et maintien en arrêt froid.

Les réacteurs nucléaires à eau sous pression comportent, à l'intérieur d'une enceinte de protection qui réalise le confinement et l'isolation des parties du réacteur renfermant des matières susceptibles d'avoir une certaine radio-activité, une cuve contenant le coeur du réacteur, un circuit primaire en communication avec la cuve du réacteur, dans lequel circule l'eau sous pression ou eau primaire et au moins deux générateurs de vapeur disposés chacun sur une boucle du circuit primaire.

L'enceinte de protection et de confinement du réacteur est constituée par un bâtiment en béton de grande dimension qui renferme en particulier la cuve en acier du réacteur à l'intérieur de laquelle sont disposés les assemblages combustibles constituant le coeur du réacteur nucléaire où se produit le dégagement de chaleur au cours de la fission du combustible. La cuve du réacteur nucléaire est remplie d'eau primaire sous pression et reliée au circuit primaire à l'intérieur duquel circule cette eau qui s'échauffe au contact du coeur du réacteur.

Le circuit primaire est constitué d'au moins deux boucles distinctes (généralement 3 ou 4) en communication avec l'intérieur de la cuve du réacteur. Sur chacune des boucles du circuit primaire sont disposés une pompe primaire assurant la circulation de l'eau sous pression et un générateur de vapeur assurant l'échange de chaleur entre l'eau primaire sous pression amenant la chaleur du coeur et de l'eau d'alimentation ou eau secondaire dont on assure la vaporisation pour l'alimentation d'une turbine associée au réacteur.

L'eau sous pression circule dans le générateur de vapeur du côté primaire de celui-ci, c'est-à-dire à l'intérieur de tubes de petit diamètre et de grande longueur disposés en grand nombre à l'intérieur de l'enveloppe du générateur de vapeur.

L'eau d'alimentation circule du côté secondaire du générateur de vapeur c'est-à-dire dans l'enveloppe de celui-ci et à l'extérieur des tubes de petit diamètre.

Le générateur de vapeur est du type à circulation à contre courant. L'eau d'alimentation ou secondaire est introduite à la base de la branche froide du faisceau, c'est-à-dire à l'extrémité du faisceau par où sort l'eau primaire sous pression. La vapeur est récupérée à la partie supérieure de l'enveloppe du générateur de vapeur.

Lors du fonctionnement du réacteur nucléaire, l'eau sous pression est à une température voisine de 300°C et à une pression de l'ordre de $155 \times 10^5$ Pa.

Le réacteur nucléaire ne fonctionne cependant pas de façon absolument continue et il est quelquefois nécessaire de provoquer un arrêt qui s'obtient en introduisant des barres de commande en matériau absorbant les neutrons, dans le coeur du réacteur, en position d'insertion maximum.

Cependant, l'eau du circuit primaire est encore à haute température et à haute pression et suivant le type d'arrêt du réacteur qu'on désire provoquer, il est nécessaire de réaliser un refroidissement et une dépressurisation plus ou moins complets de l'eau du circuit primaire du réacteur.

En particulier, lorsque l'on doit effectuer un arrêt pour entretien du réacteur nucléaire, il est nécessaire d'abaisser la température et la pression du réacteur jusqu'à un niveau très bas et de tout façon inférieur à 70°C en ce qui concerne la température et inférieur à $28 \times 10^5$ Pa en ce qui concerne la pression.

Dans le cas d'un arrêt pour rechargement, il est même nécessaire d'abaisser la pression jusqu'à la valeur de la pression atmosphérique et la température doit être comprise, dans la phase finale, entre 10 et 60°C.

Dans le cas du rechargement, il est en effet nécessaire d'ouvrir le couvercle de la cuve du réacteur pour accéder aux assemblages combustibles constituant le coeur.

Ces deux types d'arrêt du réacteur, avec abaissement de la température et de la pression du fluide primaire jusqu'à un niveau très bas sont appelés arrêts à froid du réacteur.

Généralement, on perlera d'arrêts à froid, lorsque la température dans la phase finale, est inférieure à 90°C, la pression étant inférieure à $28 \times 10^5$ Pa.

Dans tous les autres cas, on parlera d'arrêts intermédiaires ou d'arrêts à chaud qui permettent un redémarrage rapide du réacteur à ses conditions de fonctionnement nominales.

Lorsqu'on désire procéder au refroidissement du fluide primaire, lors d'un arrêt à froid, on utilise dans un premier temps la capacité de refroidissement des générateurs de vapeur qu'on alimente en eau secondaire par le circuit d'alimentation de secours, la vapeur produite étant dirigée vers le condenseur par le contournement de la turbine ou rejetée à l'atmosphère.

De cette façon, on peut refroidir l'eau sous pression circulant dans le circuit primaire jusqu'à une température voisine de 180°C.

Pour continuer le refroidissement du fluide primaire, on utilise un circuit spécial de refroidissement appelé circuit de refroidissement à l'arrêt (RRA).

Ce circuit de refroidissement à l'arrêt est branché en dérivation sur deux boucles du circuit primaire du réacteur et comporte généralement deux échangeurs de chaleur qui effectuent le refroidissement de l'eau du circuit primaire par de l'eau de réfrigération amenée à ces échangeurs. Le circuit de refroidissement à l'arrêt comporte également deux pompes de circulation et une portion de circuit permettant de courtcircuiter et régler le débit dans l'échangeur de chaleur.

Tout cet ensemble constituant le circuit RRA peut être intégré dans l'enceinte de confinement du réacteur ou au contraire disposé à l'extérieur de cette enceinte.

Dans le cas où l'ensemble est intégré à l'enceinte, on peut ainsi assurer le confinement du fluide primaire dans tous les cas de fonctionnement.

En revanche, ceci impose des conditions plus contraignantes, en ce qui concerne la maintenance et plus exigeantes pour la conception du matériel.

Lorsque les équipements des circuits de refroidissement ne sont pas intégrés dans l'enceinte de confinement, la conception et l'entretien des installations sont simplifiés mais on ne réalise plus un confinement unique du fluide primaire, c'est-à-dire la protection radiologique et l'isolement des fuites éventuelles dans tous les cas, sauf au prix d'un autre confinement contenant les équipements non intégrés dans le premier.

D'autre part, le fluide primaire qui circule dans le circuit de refroidissement est à une température qui au départ est de l'ordre de 180°C et à une pression qui est toujours supérieure ou égale à $28 \times 10^5$ Pa. En effet, pour maintenir en fonctionnement les pompes primaires, il est nécessaire d'avoir une pression au moins égale à $28 \times 10^5$ Pa, puisque les pompes primaires ne peuvent fonctionner qu'à une pression égale ou supérieure à cette limite pour éviter l'apparition du phénomène de cavitation et garantir un bon fonctionement des joints.

D'autre part, le maintien en fonctionnement des pompes primaires est nécessaire pour maintenir une bonne homogénéité chimique et thermique du fluide primaire.

Le fluide primaire est donc à haute température et en pression, lorsqu'il circule dans le circuit de refroidissement. Ceci impose de prévoir des conditions de sécurité suffisantes pour la conception et la protection du circuit de refroidissement, en particulier contre les missiles internes et externes.

Par ailleurs, le fait de refroidir le fluide primaire par les échangeurs du circuit de refroidissement crée des hétérogénéités thermiques, lorsqu'une pompe primaire devient indisponible. Dans ce cas, en particulier, les générateurs de vapeur restent à une température élevée.

On connaît également (FR-A-1 308 523) une installation de refroidissement d'un réacteur nucléaire servant pour la propulsion d'un navire qui utilise des échangeurs de chaleur disposés à l'intérieur de l'enceinte de sécurité du réacteur, en divers endroits permettant un fonctionnement de l'installation de refroidissement quelle que soit la position du navire. Ces échangeurs de chaleur peuvent utiliser comme fluide de refroidissement du fluide primaire, de l'air ou de l'eau de mer, suivant les conditions dans lesquelles doit fonctionner l'installation de refroidissement.

Dans le cas où l'on utilise de l'eau de mer, celle-ci peut être vaporisée par la chaleur du fluide primaire et rejetée à l'atmosphère sous forme de vapeur. Les échangeurs de chaleur peuvent également être disposés sur une boucle de circulation d'eau secondaire qui refroidit le fluide primaire dans les échangeurs. Cette eau secondaire est ensuite refroidie à l'extérieur de l'enceinte dans des échangeurs de chaleur utilisant de l'eau de mer comme agent de refroidissement. De telles installations qui comportent des échangeurs qui ne sont utilisés que pour le refroidissement du réacteur dans des cas d'urgence augmentent le coût et l'encombrement du réacteur. Dans le cas d'un réacteur de grande puissance, de telles installations seraient peu concevables. De plus, les échangeurs de chaleur ne peuvent avoir un fonctionnement optimum quels que soient les fluides d'échange et le mode de fonctionnement. Dans le cas où les échangeurs fonctionnent avec un circuit secondaire fermé, on doit éviter la vaporisation de l'eau secondaire quelle que soit la quantité de chaleur à extraire et donc prévoir un débit d'eau secondaire et des échangeurs de refroidissement de cette eau secondaire d'une importance auffisante.

Le but de l'invention est donc de proposer un procédé de refroidissement à l'arrêt d'un réacteur nucléaire à eau sous pression comportant, à l'intérieur d'une enceinte de confinement, une cuve contenant le coeur du réacteur, un circuit primaire ayant au moins deux boucles en communication avec la cuve du réacteur, dans lesquelles circule de l'eau sous pression ou eau primaire qui vient en contact avec le coeur du réacteur pour prélever la chaleur dégagée par ce coeur et au moins deux générateurs de vapeur du type à circulation à contre-courant disposés chacun dans une des boucles du circuit primaire et comprenant chacun une enveloppe et un faisceau vertical de tubes en U disposé à l'intérieur de l'enveloppe, l'eau primaire circulant dans les tubes du faisceau et de l'eau d'alimentation ou eau secondaire étant introduite par un circuit d'alimentation dans l'enveloppe et mise en contact d'abord avec la surface externe des tubes du faisceau, à l'extrémité par où sort l'eau primaire, le procédé de refroidissement comportant une première phase au cours de laquelle l'eau sous pression est refroidie par l'eau d'alimentation qui est évacuée sous forme de vapeur à la partie supérieure de l'enveloppe, ce procédé de refroidissement devant permettre d'éviter l'utilisation d'un circuit spécial dans lequel on fait circuler l'eau du circuit primaire, l'utilisation de composants tels que des échangeurs de chaleur et des pompes de recirculation disposés à l'intérieur de l'enceinte de confinement et l'apparition de surpression dans le circuit par exemple au redémarrage d'une pompe primaire.

Dans ce but, dans une deuxième phase, lorsque l'eau sous pression a été refroidie jusqu'à une température limite inférieure à 180°C, cette eau sous pression étant maintenue en circulation dans le circuit primaire:

— on prélève l'eau d'alimentation ayant circulé le long du faisceau à contre-courant de l'eau sous pression, à l'extrémité du faisceau par où entre l'eau sous pression,

— on refroidit l'eau d'alimentation prélevée, à l'extérieur de l'enceinte de confinement dans ou moins un échangeur de chaleur utilisant de l'eau brute de refroidissement,

— et l'on recycle l'eau d'alimentation refroidie grâce au circuit d'alimentation dans le générateur de vapeur de façon que l'eau d'alimentation reste entièrement liquide au cours de cette seconde phase du refroidissement.

Afin de bien faire comprendre l'invention, on va maintenant décrire à titre d'exemple non limitatif, en se référant aux figures jointes en annexe, un mode de réalisation du procédé suivant l'invention, dans le cas où l'on réalise un refroidissement pour parvenir aux conditions de l'arrêt à froid, en deux phases ou en trois phases.

La figure 1 représente de façon schématique le circuit de refroidissement utilisant les échangeurs de chaleur, d'un réacteur nucléaire à quatre boucles.

La figure 2 représente de façon schématique un circuit de refroidissement complémentaire du même réacteur, sans utilisation des générateurs de vapeur.

La figure 3 est un diagramme montrant les variations de la température du fluide primaire en fonction du temps, lors d'un refroidissement de ce fluide primaire depuis les conditions de fonctionnement jusqu'à celles de l'arrêt à froid.

La figure 4 est un diagramme montrant les variations de la température du fluide primaire en fonction du temps, lorsqu'on réalise un arrêt à froid du réacteur nucléaire, avec interruption cumulée de l'alimentation électrique des composants du réacteur et rupture d'une tuyauterie de vapeur.

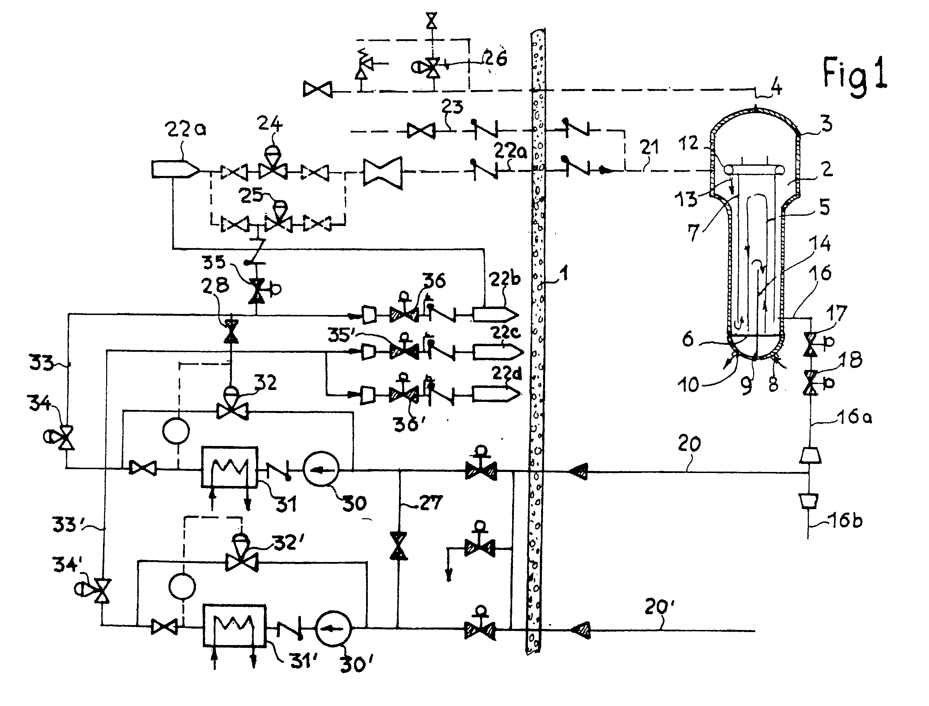

Sur la figure 1, on voit une partie de la paroi 1 de l'enceinte étanche de confinement à l'intérieur de laquelle se trouvent les quatre générateurs de vapeur et l'ensemble du circuit primaire à l'intérieur duquel circule l'eau sous pression de refroidissement du coeur du réacteur. Un seul générateur de vapeur 2 a été représenté.

Ce générateur de vapeur comporte une enveloppe dont la partie supérieure 3 à grand diamètre se termine par le dôme de vapeur auquel est reliée la tuyauterie de sortie de la vapeur 4.

La partie inférieure du générateur de vapeur de plus faible diamètre que la partie supérieure renferme le faisceau 5 fixé sur la plaque tubulaire 6 et constitué par un ensemble de tubes cintrés en U communiquant avec la partie du générateur de vapeur se trouvant sous la plaque tubulaire 6. Dans cette partie du générateur, l'eau sous pression du circuit primaire est amenée par une canalisation 8 d'un côté de la plaque de cloisonnement 9, si bien que l'eau sous pression circule à l'intérieur des tubes du faisceau d'abord verticalement et vers le haut dans les branches des tubes du faisceau situées dans la partie droite du générateur tel que représenté sur la figure 1, puis verticalement et vers le bas dans la seconde partie du faisceau située dans la partie gauche du générateur de vapeur sur la figure 1.

L'eau sous pression revient alors dans le second compartiment limité par la plaque de cloisonnement 9 pour être évacuée par la canalisation 10 faisant partie du circuit primaire.

Le faisceau tubulaire 5 est entouré par une jupe secondaire 7 autour de laquelle est disposé en partie haute, un tore d'alimentation 12 qui permet d'amener l'eau d'alimentation dans le générateur de vapeur en 13, si bien que l'eau d'alimentation circule d'abord verticalement et vers le bas à l'extérieur de la jupe 7 à la base de laquelle les ouvertures permettent le passage de l'eau dans la zone occupée par le faisceau tubulaire 5.

Dans cette zone, les deux sous-ensembles constitués par les branches verticales du faisceau sont séparés par une plaque 14 qui permet la constitution à l'intérieur de l'espace interne de la jupe 7 d'un compartiment de préchauffage où l'eau d'alimentation se déplace verticalement et vers le haut le long des tubes du faisceau du côté du retour de l'eau primaire ou branche froide et d'un second compartiment où l'eau rentre en contact avec les parties des tubes du faisceau constituant la branche chaude.

A la base de la jupe secondaire 7, du côté de la branche chaude de faisceau 5, débouche une canalisation 16 sur laquelle sont disposées deux vannes de fermeture 17 et 18. Cette canalisation 16 lorsque les vannes 17 et 18 sont ouvertes, permet l'évacuation de l'eau d'alimentation constituant le fluide secondaire du générateur de vapeur pendant la seconde phase de refroidissement à l'arrêt du réacteur.

Les quatre générateurs de vapeur du réacteur nucléaire sont identiques et comportent les mêmes éléments, les tuyauteries 16a et 16b de deux d'entre-eux étant reliées à une canalisation 20 et les canalisations 16 des deux autres générateurs à une canalisation 20'.

Les canalisations 20 et 20' traversent la paroi 1 de l'enceinte étanche et permettent la sortie de l'eau secondaire du générateur de vapeur à l'extérieur de l'enceinte de confinement en deuxième phase du procédé de refroidissement.

Le tore 12 assurant la distribution de l'eau d'alimentation dans le générateur de vapeur est relié à une canalisation 21 permettant d'amener l'eau d'alimentation soit depuis le circuit d'alimentation normal 22 soit depuis l'alimentation de secours 23.

Le circuit d'alimentation normal 22 permet d'approvisionner le générateur de vapeur en eau d'alimentation pour la production de vapeur pendant le fonctionnement normal du réacteur. Ce circuit 22 comporte de façon connue des clapets et des vannes de réglage de débit 24 et 25. La vanne 25 étant placée en dérivation par rapport à la vanne 24. Le circuit est également relié à un circuit de recyclage d'eau d'alimentation refroidie, entièrement original qui sera décrit ci-dessous.

La tuyauterie de vapeur 4 traversant l'enceinte étanche 1 est reliée à un circuit de contournement 26 permettant de diriger la vapeur soit au condenseur de la turbine, soit à l'atmosphère.

L'ensemble du circuit de contournement 26, les circuits 22 et 23 d'alimentation en eau secondaire du générateur de vapeur et les circuits de refroidissement et de recyclage de l'eau d'alimentation qui seront décrits ci-dessous sont disposés à l'extérieur de l'enceinte de confinement, étanche 1.

On a décrit un seul circuit d'alimentation normale 22 et un seul circuit d'alimentation de secours 23 mais en réalité il existe quatre circuits identiques au circuit 22 et quatre circuits identiques au circuit 23 associés chacun à l'un des générateurs de vapeur. On désigne par 22a, 22b, 22c et 22d, les quatre circuits d'alimentation normaux en eau des quatre générateurs de vapeur.

Les tuyauteries 20 et 20' qui permettent d'évacuer chacune à l'extérieur de l'enceinte l'eau secondaire chaude venant de deux générateurs de vapeur sont reliées chacune à un circuit de refroidissement de cette eau secondaire permettant également son retour et son recyclage dans les générateurs de vapeur correspondants par l'intermédiaire des circuits d'alimentation normaux 22.

On ne décrira que l'un de ces deux circuits de refroidissement qui sont identiques et reliés entre eux par des bretelles 27 et 28 normalement fermées mais permettant par leur ouverture d'utiliser, en cas d'incident sur l'un des circuits de refroidissement, l'autre circuit pour le refroidissement de l'ensemble de l'eau secondaire venant des générateurs de vapeur.

Un circuit de refroidissement comporte une pompe 30 un échangeur de chaleur 31, une portion de circuit en dérivation sur laquelle se trouve une vanne 32 et une canalisation 33 de recyclage de l'eau secondaire refroidie sur laquelle se trouve une vanne de règlage 34.

La canalisation 33 est reliée à l'un des circuits d'eau alimentaire 22a par l'intermédiaire d'une vanne 35 au niveau de la branche en dérivation sur laquelle se trouve la vanne 25. La canalisation 33 est également reliée par l'intermédiaire d'une vanne 36 au circuit d'eau d'alimentation 22b pour l'alimentation du second générateur de vapeur.

Le second circuit de refroidissement identique au précédent permet le recyclage de l'eau d'alimentation dans les circuits 22c et 22d.

Le fonctionnement du dispositif de refroidissement représenté à la figure 1 va être décrit ci-dessous.

Si l'on suppose que l'on arrête le réacteur nucléaire, l'eau primaire de celui-ci étant à plus de 300"C et à sa pression de service de $155 \times 10^5$ Pa la première phase de refroidissement consiste à introduire de l'eau d'alimentation dans les générateurs de vapeur par l'intermédiaire des circuits de secours 23 de chacun de ces générateur de vapeur et à rejeter la vapeur produite par les circuits de contournement 26 correspondant.

La vaporisation de l'eau d'alimentation introduite par le tore 12 dans le générateur de vapeur est produite par échauffement au contact des tubes du faisceau où circule l'eau primaire mise en mouvement par la pompe primaire de la boucle correspondante.

Cette première phase de refroidissement qui fait partie de l'art antérieur connu est cependant poursuivie de façon souhaitable, pour la mise en oeuvre du procédé suivant l'invention, pendant un temps un peu plus long, la température finale de l'eau du circuit primaire étant à la fin de cette première phase de l'ordre de 150°C, au lieu de 180"C dans le procédé connu.

A la fin de cette phase, la pression de l'eau du circuit primaire est de $28 \times 10^5$ Pa.

Pendant toute cette première phase les vannes 17 et 18 sont fermées si bien que l'eau d'alimentation ne peut sortir de l'enceinte du générateur que sous forme de vapeur par la tuyauterie 4.

A la fin de la première phase, on maintient l'eau sous pression en circulation dans le circuit primaire et l'on ouvre les vannes 17 et 18 si bien que le parcours de l'eau d'alimentation représenté par des flèches sur la figure 1, est, à partir du tore 12, d'abord descendant à l'extérieur de la jupe secondaire 7 puis dirigé vers le haut le long de la branche froide du faisceau jusqu'au sommet de la plaque de séparation 14 où l'eau redescend le long de la branche chaude du faisceau tubulaire pour sortir enfin par la tuyauterie 16, les vannes 17 et 18 étant ouvertes.

On voit que l'eau d'alimentation circule à contrecourant de l'eau primaire sur une grande partie de son parcours à l'intérieur d'au moins un générateur de vapeur. Ainsi l'échange de chaleur entre l'eau primaire et l'eau secondaire dans le générateur de vapeur permet un refroidissement suffisant de l'eau primaire.

L'eau secondaire est emmenée par la canalisation 20 à l'extérieur de l'enceinte dans le circuit de refroidissement où l'échangeur 31 permet d'abaisser sa temérature par échange de chaleur avec de l'eau brute de réfrigération qui peut être par exemple de l'eau de rivière qu'on fait passer dans les tubes de l'échangeur de chaleur 31.

L'eau d'alimenation refroidie est recyclée dans le générateur de vapeur où elle participe à nouveau au refroidissement de l'eau primaire.

La seconde phase se poursuit donc par circulation continue de l'eau d'alimentation dans chacun des générateurs de vapeur jusqu'au moment où l'eau primaire atteint les conditions de l'arrêt à froid c'est-à-dire, une température inférieure à 90" et une pression inférieure à $28 \times 10^5$ Pa.

Si l'on désire poursuivre le refroidissement de l'eau primaire le fonctionnement des générateurs de vapeur en échangeurs de chaleur n'est plus très satisfaisant lorsque la température de l'eau primaire devient faible, par exemple inférieure à 70"C. Il devient alors nécessaire de refroidir directement l'eau primaire dans un échangeur de chaleur disposé à l'extérieur de l'enceinte de sécurité 1.

Ce type de refroidissement est également indispensable lorsqu'on désire intervenir sur les boîtes à eau des générateurs de vapeur pour entretien ou réparation.

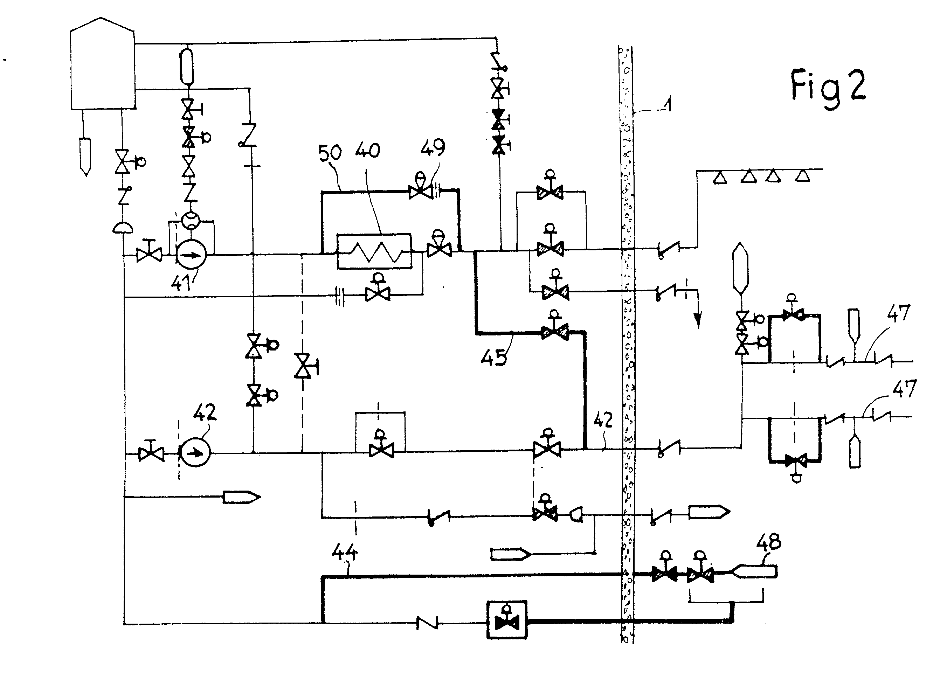

Sur la figure 2, on voit une modification d'un circuit existant sur les réacteurs nucléaires à eau sous pression permettant le refroidissement pour arriver à l'arrêt à froid par exemple dans le cas où une intervention sur un générateur de vapeur est nécessaire ou encore dans le cas d'un arrêt pour rechargement.

Sur la figure 2, on voit les circuits d'injection de sécurité et d'aspersion de l'enceinte d'un réacteur nucléaire à eau sous pression modifiés pour leur permette d'effectuer le refroidissement de l'eau primaire du réacteur à la suite de la seconde phase de refroidissement qui vient d'être décrite utilisant les générateurs de vapeur en échangeurs de chaleur eau-eau.

Les conséquences de l'inconvénient des techniques selon l'art antérieur sont en grande partie éliminées dans cette phase de refroidissement selon l'invention, puisque l'eau primaire est à basse température et à faible pression lorsqu'on en effectue le refroidissement supplémentaire à l'extérieur de l'enceinte.

Pour effectuer ce refroidissement complémentaire, on peut utiliser les échangeurs tels que 40 et les pompes de circulation 41 du circuit d'aspersion de l'enceinte et les lignes de refoulement 42 du circuit d'injection de sécurité.

On relie les branches du circuit primaire à l'aspiration des pompes 41 par l'intermédiaire de conduites telles que 44 et la sortie de l'échangeur aux branches froides du circuit primaire par l'intermédiaire d'une canalisation 45 se raccordant sur le refoulement 42 des pompes d'injection de sécurité.

En réalité il existe deux circuits de refroidissement identiques un seul de ces circuits ayant été représentés à la figure 2.

On désigne par le repère 47 les branches froides du circuit primaire et par le repère 48 les branches chaudes de ce circuit.

On dispose une conduite 50 sur laquelle est placée une vanne de règlage 49 en dérivation par rapport à l'échangeur 40.

Le refroidissement complémentaire de l'eau du circuit primaire est réalisé par circulation de cette eau primaire sous l'effet des pompes 41 dans l'échangeur de chaleur 40, avec retour de l'eau primaire refroidie dans les branches froides du circuit primaire.

On peut ainsi refroidir l'eau primaire jusqu'à une température comprise entre 10 et 60°C, en un temps beaucoup plus court que si ce refroidissement était obtenu par échange au niveau des générateurs de vapeur.

Ce type de refroidissement est également utile dans le cas où l'on doit intervenir pour l'entretien ou la réparation d'un générateur de vapeur.

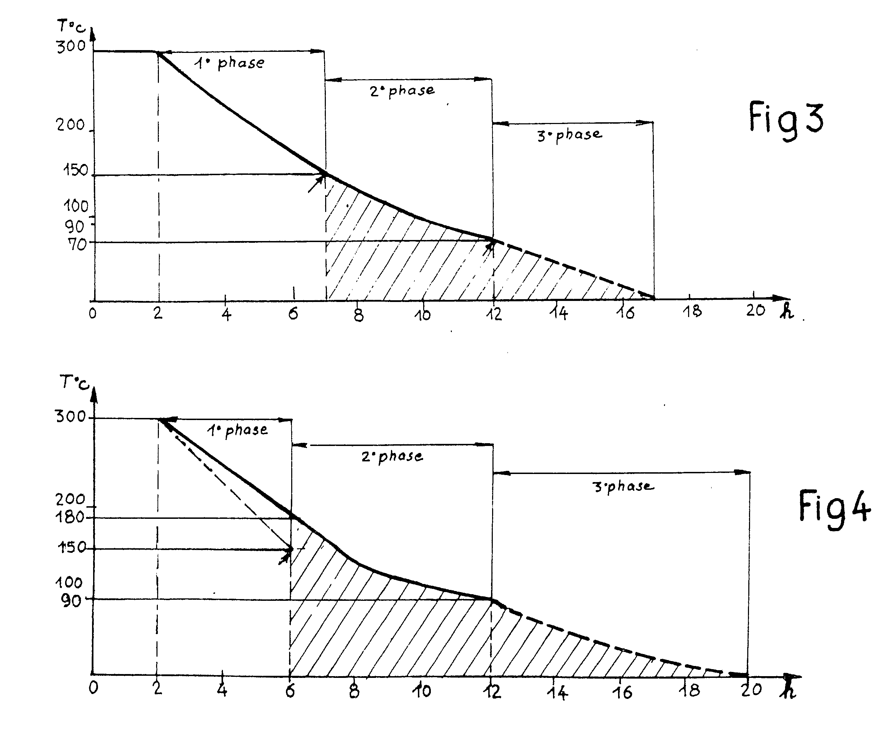

Sur la figure 3 on voit l'évolution de la température du circuit primaire du réacteur en fonction du temps, lors de mise en arrêt à froid.

Le refroidissement depuis la température de fonctionnement en arrêt à chaud du réacteur commence au temps T = 2 h par alimentation des générateurs de vapeur en eau secondaire parles circuits de secours avec rejet de la vapeur produite par le contournement de la turbine. Cette première phase de refroidissement d'une durée de 5 heures permet de faire passer la température du circuit primaire à 150"C qui correspond à la limite qu'on peut atteindre en utilisant les générateurs de vapeur avec production de vapeur.

La vitesse de refroidissement pendant toute cette phase est de 28"C par heure.

Pendant la seconde phase d'une durée de 5 h on ouvre les vannes 17 et 18 des canalisations 16 des générateurs de vapeur et on alimente ceux-ci par l'intermédiaire des circuits d'alimentation 22 reliés au circuit de refroidissement permettant le recyclage de l'eau d'alimentation.

Pendant toute cette seconde phase, au moins une pompe primaire est en fonctionnement la pression dans le circuit primaire restant supérieure à la pression minimale pour le maintien de ces pompes en fonctionnement soit $28 \times 10^5$ Pa. La vitesse de refroidissement est de 10"C par heure et au bout de 5 heures on atteint la température de 70"C dans le circuit primaire.

L'eau secondaire des générateurs de vapeur est refroidie à l'extérieur de l'enceinte. Aucune sortie d'eau sous pression n'est réalisée sur le circuit primaire pour son refroidissement à l'extérieur de l'enceinte, tout le refroidissement étant obtenu uniquement par échange liquide/liquide au niveau des générateurs de vapeur.

A la fin de la deuxième phase on arrête les pompes primaires et l'on continue le refroidissement dans une troisième phase correspondant à l'utilisation du circuit représenté sur la figure 2. Une partie de l'eau primaire circule alors à l'extérieur de l'enceinte pour son refroidissement au niveau des échangeurs du circuit d'aspersion, jusqu'au moment où la température de l'eau primaire attent une limite fixée, par exemple à 60"C et assure ensuite le maintien de cette température.

Le circuit primaire est alors entièrement dépressurisé et il est possible par exemple d'ouvrir la cuve pour des opérations de rechargement de combustible.

Sur la figure 4 on a représenté l'évolution de la température dans le circuit primaire en fonction du temps dans le cas d'un arrêt à froid accompagné d'une perte de réseau qui n'assure plus l'alimentation électrique des composants du réacteur et l'accident cumulé d'une rupture de la tuyauterie de vapeur d'un générateur.

La première phase, c'est-à-dire le refroidissement par introduction d'eau dans les générateurs de vapeur avec rejet de la vapeur à d'atmosphère peut se dérouler jusqu'à d'instant T = 6 h. La température du circuit primaire est alors de 180"C. On effectue alors le refroidissement par échange liquide/liquide au niveau d'au moins un des générateurs de vapeur, ce qui cor respond à la seconde phase.

Pendant toute cette seconde phase, les pompes primaires n'étant pas alimentées, d'eau du circuit primaire parcourt celui-ci par circulation naturelle.

On prolonge la seconde phase pendant 6 heures pour finir à une température de 90° C, la vitesse de refroidissement étant de 10° C/heure.

On poursuit alors le refroidissement en troisième phase en dérivant la circulation de d'eau primaire vers le circuit d'aspersion.

Le refroidissement total a duré approximativement 18 heures au lieu de 15 heures dans le cas de l'arrêt à froid normal décrit en se référant à la figure 3.

On voit que les principaux avantages du procédé suivant l'invention sont l'éviter la sortie d'eau primaire chaude et en pression du circuit primaire et de la zone protégée par l'enceinte de confinement, d'utiliser un circuit de refroidissement dont la majorité des éléments actifs et passifs sont en dehors de l'enceinte de confinement et d'opérer une circulation continue de l'eau primaire soit grâce aux pompes, soit par thermosiphon, lors de la seconde phase, quand l'eau primaire est encore à haute température et à une pression relativement forte.

En particulier, la conception, l'entretien et la réparation des éléments du circuit de refroidissement situés à l'extérieur de l'enceinte de confinement sont grandement facilités par rapport à des solutions où ces éléments sont disposés à l'intérieur de l'enceinte.

Lors d'un incident sur des matériels situés à l'intérieur de l'enceinte de confinement par exemple une rupture de tuyauterie vapeur, il est en effet impossible d'intervenir rapidement à l'intérieur de l'enceinte de confinement.

Il est également possible de placer les vannes de fermeture 17 et 18 pour l'evacuation et la recirculation de l'eau secondaire à l'extérieur de l'enceinte et dans ce cas tous les éléments actifs du système sont hors enceinte de confinement et leur dépannage est facilité.

Par ailleurs, le fluide circulant dans le circuit de refroidissement qui est identique à l'eau d'alimentation pour la production de vapeur en marche normale ne requiert pas les mêmes précautions que le fluide primaire, si bien qu'on peut éviter l'utilisation d'un circuit en acier inoxydable qui serait nécessaire pour de l'eau primaire.

Dans le cas où l'on ne peut plus utiliser la surface d'échange des générateurs de vapeur vidangés du côté primaire ou encore dans le cas où l'on veut poursuivre le refroidissement du circuit primaire dépressurisé jusqu'à la température ambiante, on utilisera la troisième phase de refroidissement dans laquelle l'eau primaire circule à l'extérieur de l'enceinte dans un ou plusieurs échangeurs de chaleur. Dans ce cas, cette eau primaire est déjà à une température et à une pression suffisamment faible pour que cette circulation extérieure de l'enceinte de confinement n'ait pas d'inconvénient.

Le refroidissement peut être obtenu uniquement par la mise en oeuvre de la première et de la seconde phase ou au contraire par la mise en oeuvre de la troisième phase à la suite de ces deux phases de refroidissement.

Le nombre des circuits de refroidissement associés aux générateurs de vapeur peut être quelconque, en fonction de la capacité des échangeurs de chaleur utilisés et des vitesses de refroidissement de l'eau primaire souhaitées, mais doit respecter la règle de la simple défaillance ce qui conduit à un minimum de deux files.

Les générateurs de vapeur peuvent être non seulement du type à plaque de séparation comme il vient d'être décrit, mais encore d'un type différent à partir du moment où il est possible d'assurer une circulation à contrecourant de l'eau primaire et de l'eau secondaire sur une partie importante du parcours de celle-ci.

Le refroidissement de l'eau secondaire en seconde phase peut être obtenu grâce à une eau brute quelconque disponible sur le site du réacteur.

La mise en oeuvre du procédé de refroidissement selon l'invention est possible quel que soit le type d'arrêt à froid auquel on veut parvenir.

Le refroidissement direct de l'eau primaire à l'extérieur de l'enceinte peut être obtenu dans de échangeurs et dans des circuits de refroidissement quelconques, l'utilisation des circuits d'aspersion et d'injection de sécurité ne représentant qu'un exemple pratique de réalisation demandant des modifications mineures de l'installation existante des systèmes du réacteur nucléaire.

Enfin, le procédé suivant l'invention s'applique dans le cas de tous les réacteurs nucléaires à eau sous pression quel que soit le nombre de boucles du circuit primaire et donc quelque soit le nombre de générateurs de vapeur.

**Revendications**

1. Procédé de refroidissement pour mise et maintien en arrêt à froid d'un réacteur nucléaire à eau sous pression comportant, à l'intérieur d'une enceinte de confinement (1), une cuve contenant le coeur du réacteur, un circuit primaire ayant au moins deux boucles en communication avec la cuve du réacteur, dans lesquelles circule de l'eau sous pression ou eau primaire qui vient en contact avec le coeur du réacteur pour prélever la chaleur dégagée par celui-ci et au moins deux générateurs de vapeur (2) du type à circulation à contre-courant disposés chacun dans une des boucles du circuit primaire et comprenant chacun une enveloppe et un faisceau vertical (5) de tubes en U disposé à l'intérieur de l'enveloppe, l'eau primaire circulant dans les tubes du faisceau (5) et de l'eau d'alimentation ou eau secondaire étant introduite par un circuit d'alimentation (22) dans l'enveloppe et mise en contact d'abord avec la surface externe des tubes du faisceau (5), à l'extrémité par où sort l'eau primaire, le procédé de refroidissement comportant une première phase au cours de laquelle l'eau sous pression est refroidie par l'eau d'alimentation qui est évacuée sous forme de vapeur à la partie supérieure de l'enveloppe, caractérisé par le fait que, dans une deuxième phase, lorsque l'eau sous pression a été refroidie jusqu'à une température limite inférieure à 180°C, cette eau sous pression étant maintenue en circulation dans le circuit primaire:

— on prélève l'eau d'alimenation ayant circulé le long du faisceau (5) à contre-courant de l'eau sous pression, à l'extrémité du faisceau (5) par où entre l'eau sous pression,
— on refroidit l'eau d'alimentation prélevée, à l'extérieur de l'enceinte de confinement (1) dans au moins un échangeur de chaleur (31) utilisant de l'eau brute de refroidissement,
— et on recycle l'eau d'alimentation refroidie grâce au circuit d'alimentation (22), dans le générateur de vapeur (2), de façon que l'eau d'alimentation reste entièrement liquide au cours de cette seconde phase du refroidissement.

2. Procédé de refroidissement selon la revendication 1, caractérisé par le fait qu'on commence la seconde phase de refroidissement lorsque l'eau primaire est à une température voisine de 150°C.

3. Procédé de refroidissement à l'arrêt suivant l'une quelconque des revendications 1 et 2, caractérisé par le fait qu'à la suite de la seconde phase, on effectue une troisième de refroidissement au cours de laquelle de l'eau primaire dépressurisée est dérivée du circuit primaire et refroidie à l'extérieur de l'enceinte de confinement avant son recyclage dans le circuit primaire.

4. Procédé de refroidissement suivant l'une quelconque des revendication 1, 2 et 3, caractérisé par le fait que la circulation de l'eau primaire est assurée pendant au moins une partie de la seconde phase, par thermo-siphon uniquement.

5. Dispositif de refroidissement pour mise et maintien en arrêt à froid d'un réacteur nucléaire à eau sous pression comportant, à l'intérieur d'une enceinte de confinement (1), une cuve contenant le coeur du réacteur, un circuit primaire ayant au moins deux boucles en communication avec la cuve du réacteur, dans lesquelle circule de l'eau sous pression ou eau primaire qui vient en contact avec le coeur du réacteur pour prélever la chaleur dégagée par celui-ci et au moins deux générateurs de vapeur (2) du type à circulation à contre-courant disposés chacun dans une des boucles du circuit primaire et comprenant chacun une enveloppe reliée à sa partie supérieure à une tuyauterie de sortie de vapeur (4) et un faisceau vertical (5) de tubes en U disposés à l'intérieur de l'enveloppe dont les branches verticales sont séparées par une plaque de séparation (14), un circuit d'alimentation (22) introduisant de l'eau d'alimentation ou eau secondaire dans l'enveloppe du générateur de vapeur, pour la mettre en contact avec la surface externe des tubes du faisceau (5), d'abord à l'extrémité de ces tubes par où sort l'eau primaire, caractérisé par le fait qu'une conduite (16) d'évacuation de l'eau d'alimentation relie la partie basse de l'enveloppe de chacun des générateurs de vapeur (2), du côté renfermant la branche du faisceau (5) par où entre l'eau primaire, à un circuit de refroidissement disposé à l'extérieur de l'enceinte de confinement (1), refroidi par de l'eau brute disponible sur le site du réacteur, ce circuit de refroidissement étant relié au circuit d'alimentation (22) lui-même relié à un tore d'alimentation (12) disposé en partie haute du générateur de vapeur (2), pour le recyclage de l'eau secondaire refroidie.

6. Dispositif de refroidissement suivant la revendication 5 dans le cas d'un réacteur nucléaire dont le circuit primaire comporte quatre boucles, caractérisé par le fait qu'il comporte deux circuits de refroidissement de l'eau d'alimentation, chaque circuit de refroidissement étant associé à deux générateurs de vapeur (2), ces circuits de refroidissement étant reliés par des conduites obturables (27) pour l'isolation éventuelle d'un des circuits de refroidissement en cas d'incident.

**Patentansprüche**

1. Kühlverfahren zum Abfahren und Aufrechterhalten im Kaltzustand eines Druckwasserkernreaktors bestehend, innen in einer Sicherheitshülle (1), aus einem den Reaktorkern aufnehmenden Druckbehälter, einem Primärkreis aus mindestens zwei mit dem Reaktordruckbehälter in Verbindung stehenden Kreislaufsysteme, in denen zur Entnahme der von dem Reaktorkern abgegebenen Wärme mit diesem in Berührung kommendes Druckwasser oder Primärwasser umläuft, und aus mindestens zwei jeweils in einem der Primärkreislaufsysteme angeordneten Gegenstrom-Dampferzeuger (2), die jeweils einen Mantel und ein senkrechtes innen in dem Mantel untergebrachtes U-förmiges Rohrbündel (5) aufweisen, wobei das Primärwasser in dem Rohrbündel (5) umläuft und Speisewasser oder Sekundärwasser über einen Versorgungskreis (22) an dem primärwasseraustrittsseitigen Ende dem Mantel zugeführt wird und zuerst mit der Außenfläche der Rohre des Bündels (5) in Berührung gebracht wird, wobei das Kühlverfahren eine erste Phase umfaßt, in welcher das Druckwasser durch das Speisewasser gekühlt wird, das an dem Manteloberteil als Dampf abgeführt wird, dadurch gekennzeichnet, daß, wenn das Druckwasser bis zu einer Grenztemperatur unter 180°C abgekühlt ist, wobei das Druckwasser weiterhin im Primärkreis umläuft, in einer zweiten Phase:

— das im Gegenstrom zu dem Druckwasser dem Rohrbündel (5) entlang umgewälzte Speisewasser an dem druckwassereintrittsseitigen Ende des Rohrbündels (5) entnommen wird,
- das entnommene Speisewasser mindestens in einem Wärmetauscher (31) außerhalb der Sicherheitshülle (1) mit rohem Kühlwasser gekühlt wird,
- und dieses gekühlte Speisewasser über einen Versorgungskreis (22) dem Dampferzeuger (2) rückgeführt wird, damit das Speisewasser in dieser zweiten Kühlungsphase vollkommen im Flüssigzustand bleibt.

2. Kühlverfahren nach Anspruch 1, dadurch gekennzeichnet, daß die zweite Kühlungsphase beginnt, wenn das Primärwasser eine bei 150°C liegende Temperatur erreicht hat.

3. Kühlverfahren im abgeschalteten Zustand nach einem der Ansprüche 1 und 2, dadurch gekennzeichnet, daß nach der zweiten Phase eine dritte Kühlphase stattfindet, in welcher das drucklose Primärwasser aus dem Primärkreis abgezweigt wird und bevor dessen Rückführung in den Primärkreis außerhalb der Sicherheitshülle gekühlt wird.

4. Kühlverfahren nach einem der Ansprüche 1, 2 und 3, dadurch gekennzeichnet, daß während mindestens einem Teil der zweiten Phase das Primärwasser nur über einen Thermosiphon umgewälzt wird.

5. Kühlvorrichtung zum Abfahren und Aufrechterhalten im Kaltzustand eines Druckwasserkernreaktors bestehend, innen in einer Sicherheitshülle (1), aus einem den Reaktorkern aufnehmenden Druckbehälter, einem Primärkreis aus mindestens zwei mit dem Reaktordruckbehälter in Verbindung stehenden Kreislaufsystem, in denen zur Entnahme der von dem Reaktorkern abgegebenen Wärme mit diesem in Berührung kommendes Druckwasser oder Primärwasser umläuft, und aus mindestens zwei jeweils in einem der Primärkreislaufsysteme angeordneten Gegenstrom-Dampferzeuger (2) mit jeweils einem Mantel, der an seinem Oberteil an eine Dampfaustrittsleitung angeschlossen ist, sowie mit einem senkrechten innen in dem Mantel angeordneten U-förmigen Rohrbündel (5) — die senkrechten Rohrschenkel sind durch eine Trennwand (14) getrennt — wobei Speisewasser oder Sekundärwasser über einen Versorgungskreis (22) dem Dampferzeugermantel zugeführt wird, um dieses mit der Außenfläche der Rohre des Bündels (5), zuerst an dem primärwasseraustrittsseitigen Ende dieser Rohre in Berührung zu bringen, dadurch gekennzeichnet, daß eine Speisewasserausströmungsleitung den unteren Mantelteil der jeweiligen Dampferzeuger (2) an der den Schenkel des Rohrbündels (5) aufnehmenden Seite, an welcher das Primärwasser eintritt, mit einem außerhalb der Sicherheitshülle (1) angeordneten Kühlkreis verbindet, der mit auf dem Reaktorgelände zur Verfügung stehendem Rohwasser gekühlt wird, wobei dieser Kühlungskreis mit dem Versorgungskreis (22) verbunden ist, der seinerseits an eine in dem Oberteil des Dampferzeugers (2) angeordnete ringförmige Versorgungsleitung (12) zur Rückführung des gekühlten Sekundärwassers angeschlossen ist.

6. Kühlvorrichtung nach Anspruch 5, bei einem Kernreaktor, bei dem der Primärkreis vier Kreislaufsysteme umfaßt, dadurch gekennzeichnet, daß sie zwei Speisewasserkühlkreise umfaßt, wobei jedem Kühlkreis zwei Dampferzeuger (2) zugeordnet sind und wobei diese Kühlkreise zur evtl. Isolierung im Störungsfall eines dieser Kühlkreise über absperrbare Rohrleitungen (27) verbunden sind.

**Claims**

1. Cooling process for initiating and maintaining a cold shut-down of a pressurised water nuclear reactor incorporating, inside a containment enclosure (1), a vessel containing the reactor core, a primary circuit having at least two loops communicating with the reactor vessel, in which loops circulates the pressurised water, or primary water, which comes into contact with the reactor core to remove the heat released by the latter and at least two steam generators (2) of the counterflow type, each arranged in one of the loops of the primary circuit and each incorporating a shell and a vertical bundle (5) of U-shaped tubes which is arranged inside the shell, the primary water circulating in the tubes of the bundle (5) and feed water, or secondary water, being introduced through a feed line (22) into the shell and being first caused to contact the outer surface of the tubes of the bundle (5), at the end through which the primary water flows out, the cooling process including a first phase during which the pressurised water is cooled by the feed water which is removed in the form of steam from the upper part of the shell, characterised in that, in a second phase, when the pressurised water has been cooled to a limiting temperature below 180°C, this pressurised water being kept in circulation in the primary circuit:

- the feed water which has circulated along the bundle (5), countercurrent to the pressurised water, is whitdrawn at the end of the bundle (5) by which the pressurised water enters,
- the withdrawn feed water is cooled, outside the containment enclosure (1) in at least one heat exchanger (31) employing raw cooling water, and
- the cooled feed water is recycled by virtue of the feed circuit (22), into the steam generator (2), so that the feed water remains completely liquid during this second cooling phase.

2. Cooling process according to Claim 1, characterised in that the second cooling phase is started when the primary water is at a temperature in the region of 150°C.

3. Cooling process during shut-down according to either of Claims 1 and 2, charaterised in that, after the second phase, a third cooling phase is carried out during which depressurised primary water is diverted from the primary circuit and cooled outside the containment enclosure before being recycled into the primary circuit.

4. Cooling process according to any one of Claims 1, 2 and 3, characterised in that the circulation of the primary water is provided, during at least a part of the second phase, only by a thermosyphon.

5. Cooling device for initiating and maintaining a cold shut-down of a pressurised water nuclear reactor comprising, inside a containment enclosure (1), a vessel containing the reactor core, a primary circuit having at least two loops communicating with the reactor vessel, in which loops circulates the pressurised water, or primary water, which comes into contact with the reactor core to remove the heat released by the latter and at least two steam generators (2) of the counterflow type each of which is arranged in one of the loops of the primary circuit and each including a shell connected at its upper part to a steam outlet pipe and a vertical bundle (5) of U-shaped tubes which are arranged inside the shell the vertical branches of which are separated by a separation plate (14), a feed circuit (22) introducing feed water, or secondary water, into the shell of the steam generator to cause it to contact the outer surface of the tubes of the bundle (5), firstly at the end of these tubes through which the primary water flows out, characterised in that a pipe (16) for discharging the feed water connects the lower part of the shell of each of the steam generators (2), on the side including the branch of the bundle (5) through which the primary water enters, to a cooling circuit arranged outside the containment enclosure (1), this cooling circuit, which is cooled by the raw water available at the reactor site, being connected to the feed circuit (22) which is itself connected to a feed torus (12) arranged in the upper part of the steam generator (2), for recycling the cooled secondary water.

6. Cooling device according to Claim 5, in the case of a nuclear reactor whose primary circuit incorporates four loops, characterised in that it comprises two circuits for cooling the feed water, each cooling circuit being associated with two steam generators (2), these cooling circuits being connected by pipelines (27) which are capable of being closed for isolating, if appropriate, one of the cooling circuits in the event of a malfunction.

Fig 1

0 055 969

Fig 2

0 055 969

13

Fig 3

Fig 4